# EUROPÄISCHE PATENTSCHRIFT

(11) **EP 1 448 417 B1**
(45) Veröffentlichungstag und Bekanntmachung des Hinweises auf die Patenterteilung: **26.03.2008**
(21) Anmeldenummer: 02803792.7
(22) Anmeldetag: 25.11.2002
(51) Int. Cl.: B60T 8/18

(54) **VERFAHREN ZUM BETREIBEN EINES ANTIBLOCKIERSYSTEMS**
METHOD FOR OPERATION OF AN ANTI-SKID SYSTEM
PROCEDE D'UTILISATION D'UN SYSTEME ANTIBLOCAGE

(30) Priorität: 27.11.2001 DE 10158026
(43) Veröffentlichungstag der Anmeldung: 25.08.2004
(73) Patentinhaber: Lucas Automotive GmbH, 56070 Koblenz (DE)
(72) Erfinder: KINGSTON, Andrew, 56323 Waldesch (DE)
(74) Vertreter: Röthinger, Rainer
(86) Internationale Anmeldenummer: PCT/EP2002/013239
(87) Internationale Veröffentlichungsnummer: WO 2003/045754

(56) Entgegenhaltungen:
- US-A- 4 755 008
- US-A- 4 778 223
- US-A- 5 505 532

## Beschreibung

Die Erfindung betrifft ein Verfahren zum Betreiben eines Antiblockiersystems, bei dem in Abhängigkeit von dem Bewegungszustand eines Rades Stellbefehle für ein Stellglied erzeugt werden.

Antiblockiersysteme (ABS) sind Regeleinrichtungen in einem Fahrzeug-Bremssystem, die das Blockieren der Räder beim Bremsen verhindern, um die Lenkbarkeit und die Fahrstabilität zu erhalten.

Bei herkömmlichen ABS wird mittels Raddrehzahlsensoren der Bewegungszustand eines oder mehrerer Räder überwacht. Tritt an einem Rad eine Blockierneigung auf, so nehmen Radumfangsverzögerung und Radschlupf stark zu. Sobald diese beiden Parameter bestimmte kritische Werte überschreiten, gibt ein Steuergerät des ABS Stellbefehle an eines oder mehrere Stellglieder in Gestalt von beispielsweise Magnetventileinheiten. Die Stellglieder stoppen daraufhin den Aufbau des Radbremsdrucks oder bauen diesen Druck ab, bis die Blockiergefahr beseitigt ist. Damit das Rad nicht unterbremst ist, muss der Bremsdruck anschließend erneut aufgebaut werden. Während dieser Bremsregelung muss wechselweise die Stabilität und die Instabilität der Radbewegung erkannt werden, und durch eine zyklische Folge von Druckauf-bau-, Druckhalte- und Druckabbauphasen muss das Rad im Schlupfbereich mit maximaler Bremskraft geregelt werden.

Das ABS muss eine Reihe von Störgrößen berücksichtigen. Dazu gehören beispielsweise Änderungen des Kraftschlusses zwischen Reifen und Fahrbahn, Fahrbahnunebenheiten, welche Rad- und Achsschwingungen hervorrufen, usw.

Die Erfassung der vertikalen Reifenkraft und die Berücksichtung der vertikalen Reifenkraft im Rahmen eines Bremseingriffs ist aus der US 4,778,223, der US 5,505,532 und der US 4,755,008 bekannt.

Die DE 197 44 725 A1 lehrt das Ermitteln von Fahrzeugzustandsgrößen als Eingangsgrößen für Kraftfahrzeug-Reglungssystem (z.B. Antiblockiersysteme) mit Hilfe von Reifensensoren, die auch die vertikale Reifenkraft erfassen. Bei der Berechnung der Fahrzeugzustandsgrößen werden darüber hinaus die Ausgangssignale herkömmlicher Sensoren wie Radsensoren zu Korrekturzwecken berücksichtigt.

Der Erfindung liegt die Aufgabe zugrunde, ein Verfahren zum Betreiben eines Antiblockiersystems anzugeben, welches sich insbesondere bei Fahrbahnunebenheiten und Nickbewegungen des Fahrzeugs durch eine verbesserte Funktionalität auszeichnet. Aufgabe der Erfindung ist es weiterhin, ein verbessertes Antiblockiersystem zur Verfügung zu stellen.

Diese Aufgabe wird bei einem Verfahren zum Betreiben eines Antiblockiersystems der eingangs genannten Art erfindungsgemäß dadurch gelöst, dass eine für die vertikale Reifenkraft, auch Radlast oder Radaufstandskraft genannt, charakteristische Größe ermittelt wird und diese Größe beim Erzeugen der Stellbefehle für das mindestens eine Stellglied berücksichtigt wird. Dies schließt auch den Fall mit ein, dass eine Mehrzahl von für die vertikale Reifenkraft charakteristischen Größen zum Erzeugen der Stellbefehle herangezogen werden. Das Berücksichtigen der für die vertikale Reifenkraft charakteristischen Größe beim Erzeugen der Stellbefehle erfolgt gemäß den kennzeichnenden Merkmalen der Ansprüche 1 und 10.

Herkömmliche ABS können zwischen einer Änderung des Kraftschlusses zwischen Reifen und Fahrbahn einerseits und einer Änderung der vertikalen Reifenkraft andererseits nicht unterscheiden. Aus diesem Grund kommt es in bestimmten Fällen, etwa bei starken Fahrbahnunebenheiten oder bei Nickbewegungen des Fahrzeugs, welche beispielsweise während des Anfahrens und des Anhaltens auftreten, zu einer suboptimalen Bremsregelung durch das ABS. Indem das erfindungsgemäße ABS eine für die vertikale Reifenkraft charakteristische Größe als separaten Parameter für die Regelung eines ABS-unterstützten Bremsvorgangs berücksichtigt, können in vielen Fällen die Fahrstabilität verbessert und der Bremsweg verkürzt werden.

Die für die vertikale Reifenkraft charakteristische Größe kann entweder die vertikale Reifenkraft selbst sein oder ein oder mehrere andere Parameter, welche einen Rückschluss auf die vertikale Reifenkraft gestatten. Derartige Parameter lassen sich aus dem Federungssystem und/oder dem Dämpfungssystem und/oder aus anderen Untersystemen des Fahrzeugs ableiten.

So gestattet beispielsweise der Federweg, welcher gemessen, geschätzt oder berechnet werden kann, einen Rückschluss auf die vertikale Reifenkraft. Zusätzlich oder anstatt des Federwegs können beim Ermitteln der für die vertikale Reifenkraft charakteristischen Größe Federkonstanten und/oder Dämpferkonstanten berücksichtigt werden. Auch ist es denkbar, die für die vertikale Reifenkraft charakteristische Größe unter Zuhilfenahme einer ermittelten Federkraft oder eines ermittelten Federdrucks (aktive Federung) zu bestimmen.

Beim Erzeugen der Stellbefehle können Reifencharakteristika mit berücksichtigt werden. Dieses Berücksichtigen von Reifencharakteristika kann beispielsweise dadurch erfolgen, dass die Reifencharakteristika bereits in das Ermitteln der vertikalen Reifenkraft mit einfließen, oder dadurch, dass beim Erzeugen der Stellbefehle die für die vertikale Reifenkraft charakteristische Größe und die Reifencharakteristika getrennt berücksichtigt werden.

Das Ermitteln der für die vertikale Reifenkraft charakteristischen Größe kann auf unterschiedliche Art und Weise erfolgen. So kann diese Größe durch Schätzen, Messen oder Berechnen bestimmt werden. Gemäß einer bevorzugten Variante der Erfindung ist das Ermitteln der für die vertikale Reifenkraft charakteristischen Größe ein mehrstufiger Prozess, bei dem in einem ersten Schritt ein oder mehrere erste Parameter wie beispielsweise der Federweg ermittelt werden und in einem zweiten Schritt auf der Grundlage dieser Parameter auf die vertikale Reifenkraft geschlossen wird. Die beim Erzeugen der Stellbefehle berücksichtigte und für die vertikale Reifenkraft charakteristische Größe kann jedoch auch unmittelbar, d.h. ohne solche Zwischenschritte, ermittelt werden.

Zweckmäßigerweise werden die Stellbefehle derart erzeugt, dass sie bei einer Änderung der vertikalen Reifenkraft auf eine gleichsinnige Änderung einer Stellgröße des Antiblockiersystems gerichtet sind. So kann beispielsweise bei einer Verringerung der vertikalen Reifenkraft der Bremsdruck ebenfalls reduziert und bei einer Erhöhung der vertikalen Reifenkraft der Bremsdruck ebenfalls erhöht werden. Vorzugsweise erfolgt eine Ermittlung der vertikalen Reifenkraft und eine darauf aufbauende Regelung des Bremsdrucks getrennt für die einzelnen Räder des Fahrzeugs.

In einem ersten Schritt wird zunächst ein Kompensationssignal auf der Grundlage der für die vertikale Reifenkraft charakteristischen Größe generiert und mittels dieses Kompensationssignals auf solche Stellbefehle, welche unkompensiert, d.h. ohne Berücksichtigung der für die vertikale Reifenkraft charakteristischen Größe, erzeugt wurden, Einfluss genommen. Dies geschieht derart, dass zunächst unkompensierte Stellbefehle unter Berücksichtigung des Bewegungszustands mindestens eines Rades erzeugt werden und anschließend die (kompensierten) Stellbefehle für das mindestens eine Stellglied auf der Grundlage der unkompensierten Stellbefehle unter Berücksichtigung des Kompensationssignals generiert werden.

Beim Erzeugen der Stellbefehle kann zusätzlich ein für einen Bremswunsch charakteristisches elektrisches Signal berücksichtigt werden. Ein derartiges Signal wird beispielweise bei elektrohydraulischen Bremsanlagen erzeugt. Das erfindungsgemäße Verfahren kann jedoch auch bei herkömmlichen Bremsanlagen Verwendung finden, bei welchen die von einem Fahrer aufgebrachte Bremskraft mittels Hebelübersetzung des Bremspedals mechanisch auf einen Unterdruck-Bremskraftverstärker und dann verstärkt weiter auf einen Hauptzylinder übertragen wird.

Die Erfindung kann sowohl in Form eines Steuerprogramms, welches in einem flüchtigen oder nicht flüchtigen Speicher oder auf einem Datenträger gespeichert ist, oder in apparativer Gestalt zum Einsatz kommen. Was die apparative Ausgestaltung des Antiblockiersystems anbelangt, können Mittel zum Ermitteln der für die vertikale Reifenkraft charakteristischen Größe vorgesehen werden, wobei die ermittelte und für die vertikale Reifenkraft charakteristische Größe vom ABS beim Erzeugen der Stellbefehle berücksichtigt wird.

Nachfolgend wird eine bevorzugte Ausgestaltung der Erfindung unter Bezugnahme auf die Zeichnungen näher erläutert. Es zeigt:
- Fig. 1: ein schematisches Blockdiagram eines erfindungsgemäßen ABS;
- Fig. 2: eine schematische Darstellung der vertikalen Reifenkraft; und
- Fig. 3: eine schematische Darstellung des Federwegs sowie der Federkraft, welche bei einem Federungssystem eines Kraftfahrzeugs auftreten.

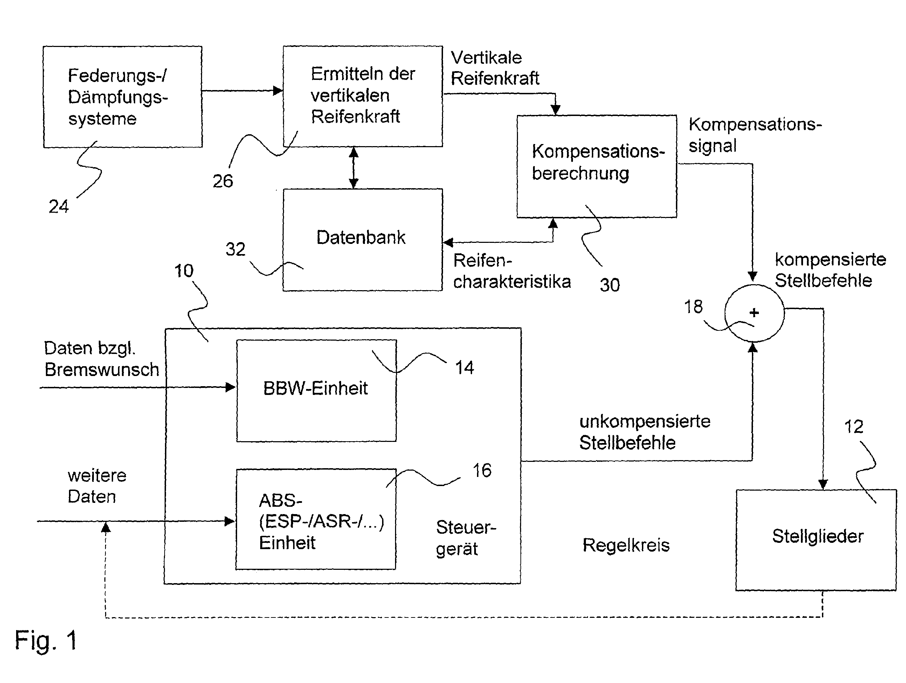

In Fig. 1 ist ein Ausführungsbeispiel eines erfindungsgemäßen ABS für eine elektrohydraulische Bremsanlage dargestellt. Das ABS umfasst in bekannter Weise ein Steuergerät 10 und pro Rad ein Stellglied 12 in Gestalt je eines Raddruckmodulators. Das Steuergerät 10 umfasst eine Brake-by-Wire-(BBW-) Einheit 14 sowie eine ABS-Einheit 16. In der ABS-Einheit 16 des Steuergeräts 10 sind weitere Funktionen wie Antriebsschlupfregelung (ASR) und elektronisches Stabilitätsprogramm (ESP) programmtechnisch integriert.

Die BBW-Einheit 14 des Steuergeräts 10 empfängt in Form von elektrischen Signalen Daten bezüglich eines Bremswunsches, welche von z.B. einem Pedalwegsensor generiert werden. Die ABS-Einheit 16 mit ESP- und ASR-Funktion des Steuergeräts 10 empfängt von weiteren Sensoren weitere Daten über den Fahrzustand, wie Geschwindigkeit oder Kurvenfahrt, und über den Bewegungszustand der Räder. Aus den Bremswunschdaten und den weiteren Daten ermittelt das Steuergerät Stellbefehle für die Stellglieder 12. Die Stellglieder 12 setzen die empfangenen Stellbefehle in die entsprechende Stellgröße, d.h. in Bremsdrücke für die Radzylinder, um. Über die Regelstrecke Reifen/Straße und die Sensoren zur Erfassung der weiteren Daten erhält man in bekannter Weise einen geschlossenen Regelkreis.

Das in Fig. 1 dargestellte ABS besitzt eine Schnittstelle 18, um einen übergeordneten Steuereingriff von außen in die ABS-Regelung zu ermöglichen. Die Schnittstelle 18 gestattet so das Berücksichtigen der vertikalen Reifenkraft beim Erzeugen der Stellbefehle für die Stellglieder 12.

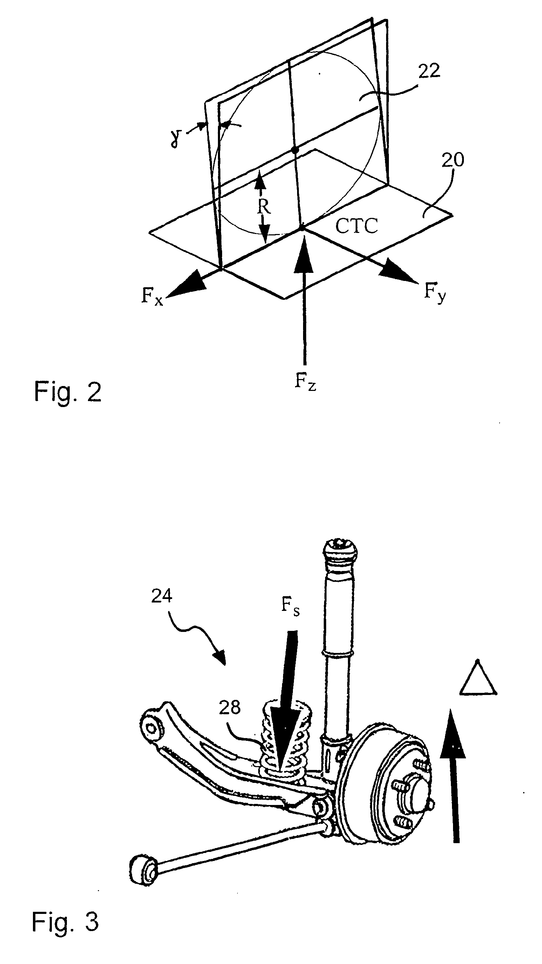

Nachfolgend wird unter Bezugnahme auf Fig. 2 die Wirkrichtung der vertikalen Reifenkraft F_{z} näher erläutert. In Fig. 2 ist ein auf einer Fahrbahn 20 abrollendes Rad 22 mit einem momentanen Rollradius R dargestellt. Wie sich aus Fig. 2 ergibt, besitzt das Rad eine gewisse Inklination γ bezüglich der Fahrbahn 20. Der Angriffspunkt der Reifenkraft an der Fahrbahn 20 ist mit CTC (Centre of Tire Contact) bezeichnet. Bezüglich der Fahrbahnebene lässt sich die Reifenkraft in drei Kraftkomponenten Fₓ, Fy, F_{z} zerlegen. Die vertikale Reifenkraft F_{z} bezeichnet diejenige Kraftkomponente der Reifenkraft, welche normal zur Fahrbahnebene wirkt.

Wie bereits erläutert, erfolgt das Berücksichtigen der vertikalen Reifenkraft F_{z} bei dem ABS gemäß dem in Fig. 1 dargestellten Ausführungsbeispiel mittels eines Eingriffs in den ABS-Regelkreis. Genauer gesagt ermöglicht die Schnittstelle 18 das Berücksichtigen eines Reifenkraft-Kompensationssignals zur Erzeugung kompensierter Stellbefehle. In dem in Fig. 1 dargestellten Ausführungsbeispiel erfolgt die Kompensation der unkompensierten, von dem Steuergerät 10 erzeugten Stellbefehle mittels der Schnittstelle 18. Die Schnittstelle 18 besitzt zu diesem Zweck eine Signalverarbeitungsfunktionalität, welche es der Schnittstelle 18 gestattet, auf der Grundlage der (unkompensierten) Stellsignale von dem Steuergerät 10 einerseits und des Kompensationssignals andererseits kompensierte Stellbefehle für die Stellglieder 12 zu erzeugen. Dies kann z.B. dadurch geschehen, dass das Kompensationssignal als additive Komponente den unkompensierten Stellbefehlen hinzugefügt wird.

Andere Ausgestaltungen zum Einkoppeln des Kompensationssignals in den ABS-Regelkreis sind denkbar. So wäre es beispielsweise möglich, das Kompensationssignal als weiteres Eingangssignal für das Steuergerät 10 zu verwenden, so dass das Steuergerät 10 unmittelbar, d.h. ohne den Zwischenschritt des Erzeugens unkompensierter Stellbefehle, die kompensierten Stellbefehle für die Stellglieder 12 erzeugt.

Nachfolgend wird die Erzeugung des Kompensationssignals unter Bezugnahme auf Fig. 1 näher erläutert. Das Kompensationssignal wird in einem separaten und mittels der Schnittstelle 18 an den ABS-Regelkreis gekoppelten, offenen Zweig (open loop) generiert. Zum Generieren des Kompensationssignals wird auf Parameter von Federungs-/Dämpfungssystemen 24 des Fahrzeugs zurückgegriffen. Genauer gesagt greift eine Einheit 26 zum Ermitteln der vertikalen Reifenkraft auf die Federungs-/Dämpfungssysteme 24 zurück. Im Rahmen dieses Rückgriffs der Einheit 26 auf die Federungs-/Dämpfungssysteme 24 wird der Federweg sowie der Gradient des Federwegs ermittelt.

Einige für die Ermittlung der vertikalen Reifenkraft relevante Parameter sind in den in Fig. 3 dargestellten Federungs-/Dämpfungssystemen 24 graphisch näher erläutert. In Fig. 3 sind die Federkraft F_{S} und der Federweg Δ als Pfeile eingezeichnet. Die Federkraft F_{S} ist diejenige Kraft, welche eine Kompression der Feder 28 bewirkt. Der Federweg Δ bezeichnet die damit im Zusammenhang stehende relative Verschiebung am Rad.

Die in Fig. 1 dargestellte Einheit 26 zum Ermitteln der vertikalen Reifenkraft empfängt die gemessenen, geschätzten oder anderweitig ermittelten Parameter Federweg Δ und zeitlicher Gradient des Federwegs Δ und bestimmt daraus sowie aus weiteren Daten die vertikale Reifenkraft F_{z}. Die vertikale Reifenkraft F_{z} ist eine Funktion der Federkraft F_{S} und der Dämpferkraft F_{D}, F_{z} = f(F_{S}, F_{D}). Die Federkraft F_{S} lässt sich aus dem Federweg Δ ableiten, es gilt F_{S} = f(Δ). Die Dämpferkraft F_{D} lässt sich anhand der ersten zeitlich Ableitung des Federwegs Δ sowie anhand der Dämpferkennlinie K bestimmen, F_{D} = f(dΔ/dt, K). Die Dämpferkennlinie K ist in einer Datenbank 32 abgelegt, auf welche die Einheit 26 zum Ermitteln der vertikalen Reifenkraft Zugriff hat.

Die von der Einheit 26 ermittelte vertikale Reifenkraft wird einem Kompensationsberechnungsschaltkreis 30 zugeführt. Der Kompensationsberechnungsschaltkreis 30 berechnet ein geeignetes Kompensationssignal, welches mittels der Schnittstelle 18 in den ABS-Regelkreis eingekoppelt wird. Bei dieser Berechnung des Kompensationssignals greift der Kompensationsberechnungsschaltkreis 30 auf die Datenbank 32 zu. Die Datenbank 32 enthält zusätzlich zu den Daten betreffend die Dämpferkennlinie auch Daten bezüglich der Reifencharakteristika, wie Reifendurchmesser, Reifenbreite, Reifendruck, usw. Das Berücksichtigen derartiger Reifencharakteristika bei der Berechnung des Kompensationssignals gestattet eine noch bessere Regelung des ABS.

Abweichend von dem in Fig. 1 dargestellten Ausführungsbeispiel kann ein Berücksichtigen der Reifencharakteristika bereits im Rahmen des Ermittelns der vertikalen Reifenkraft erfolgen. In diesem Fall greift die Einheit 26 unmittelbar auf die Datenbank 32 zu.

Der Kompensationsberechnungsschaltkreis 30 berechnet das Kompensationssignal in Abhängigkeit von einer Änderung der vertikalen Reifenkraft derart, dass die mittels des Kompensationssignals kompensierten und den Stellgliedern 12 zugeführten Stellbefehle eine gleichsinnige Änderung des Bremsdrucks bewirken. Dies führt bei einer Verringerung der vertikalen Reifenkraft zu einer Verringerung des Bremsdrucks und umgekehrt.

## Patentansprüche

1. Verfahren zum Betreiben eines Antiblockiersystems, bei dem in Abhängigkeit von dem Bewegungszustand mindestens eines Rades Stellbefehle für mindestens ein Stellglied (12) erzeugt werden,
enthaltend die Schritte:
a) Ermitteln einer für die vertikale Reifenkraft charakteristischen Größe; und
b) Berücksichtigen der in Schritt (a) ermittelten Größe beim Erzeugen der Stellbefehle;
**dadurch gekennzeichnet, dass** Schritt (b) folgende Unterschritte umfasst:
(b1) Erzeugen von unkompensierten Stellbefehlen unter Berücksichtigung des Bewegungszustandes mindestens eines Rades;
(b2) Erzeugen eines Kompensationssignals auf der Grundlage der für die vertikale Reifenkraft charakteristischen Größe; und
(b3) Erzeugen der Stellbefehle für das mindestens eine Stellglied (12) auf der Grundlage der unkompensierten Stellbefehle unter Berücksichtigung des Kompensationssignals.

2. Verfahren nach Anspruch 1,
**dadurch gekennzeichnet, dass** Schritt (a) das Berücksichtigen mindestens eines im Zusammenhang mit einem Federungssystem und/oder einem Dämpfungssystem (24) stehenden Parameters umfasst.

3. Verfahren nach Anspruch 2,
**dadurch gekennzeichnet, dass** Schritt (a) das Berücksichtigen eines Federwegs umfasst.

4. Verfahren nach Anspruch 2 oder 3,
**dadurch gekennzeichnet, dass** Schritt (a) das Berücksichtigen von Federkonstanten und/oder von Dämpferkonstanten umfasst.

5. Verfahren nach einem der Ansprüche 2 bis 4,
**dadurch gekennzeichnet, dass** Schritt (a) das Berücksichtigen einer Federkraft oder eines Federdrucks umfasst.

6. Verfahren nach einem der Ansprüche 1 bis 5,
**dadurch gekennzeichnet, dass** das Erzeugen der Stellbefehle in Schritt (b) ein Berücksichtigen von Reifencharakteristika umfasst.

7. Verfahren nach einem der Ansprüche 1 bis 6,
**dadurch gekennzeichnet, dass** in Schritt (a) die vertikale Reifenkraft durch Schätzen ermittelt wird.

8. Verfahren nach einem der Ansprüche 1 bis 7,
**dadurch gekennzeichnet, dass** die in Schritt (b) erzeugten Stellbefehle bei einer Änderung der vertikalen Reifenkraft auf eine gleichsinnige Änderung einer Stellgröße des Antiblockiersystems gerichtet sind.

9. Verfahren nach einem der Ansprüche 1 bis 8,
**dadurch gekennzeichnet, dass** in Schritt (b) beim Erzeugen der Stellbefehle ein für einen Bremswunsch charakteristisches elektrisches Signal berücksichtigt wird.

10. Antiblockiersystem, welches in Abhängigkeit von dem Bewegungszustand mindestens eines Rades Stellbefehle für mindestens ein Stellglied (12) erzeugt, wobei Mittel (26) zum Ermitteln einer für die vertikale Reifenkraft charakteristischen Größe, die vom Antiblockiersystem beim Erzeugen der Stellbefehle berücksichtig wird, vorhanden sind, **dadurch gekennzeichnet, dass** ferner Mittel (10) zum Erzeugen von unkompensierten Stellbefehlen unter Berücksichtigung des Bewegungszustands mindestens eines Rades, Mittel (30) zum Erzeugen eines Kompensationssignals auf der Grundlage der für die vertikale Reifenkraft charakteristischen Größe und Mittel (18) zum Erzeugen der Stellbefehle für das mindestens eine Stellglied (12) auf der Grundlage der unkompensierten Stellbefehle unter Berücksichtigung des Kompensationssignals vorhanden sind.

## Claims

1. Method of operating an anti-lock braking system in which, as a function of the motional state of at least one wheel, control commands are generated for at least one actuator (12),
comprising the steps of:
a) determining a quantity characteristic of the vertical tyre force; and
b) taking into account the quantity determined in step (a) when generating the control commands;
**characterized in that** step (b)comprises the following sub-steps:
(b1) generating uncompensated control commands while taking into account the motional state of at least one wheel;
(b2) generating a compensation signal on the basis of the quantity characteristic of the vertical tyre force; and
(b3) generating the control commands for the at least one actuator (12) on the basis of the uncompensated control commands while taking the compensation signal into account.

2. Method according to claim 1,
**characterized in that** step (a) comprises the taking into account of at least one parameter connected with a suspension system and/or a damping system (24).

3. Method according to claim 2,
**characterized in that** step (a) comprises the taking into account of a spring travel.

4. Method according to claim 2 or 3,
**characterized in that** step (a) comprises the taking into account of spring constants and/or damper constants.

5. Method according to one of claims 2 to 4,
**characterized in that** step (a) comprises the taking into account of a spring force or a spring pressure.

6. Method according to one of claims 1 to 5,
**characterized in that** the generating of the control commands in step (b) comprises a taking into account of tyre characteristics.

7. Method according to one of claims 1 to 6,
**characterized in that** in step (a) the vertical tyre force is determined by estimation.

8. Method according to one of claims 1 to 7,
**characterized in that** upon a change of the vertical tyre force, the control commands generated in step (b) are directed towards a change of a manipulated variable of the anti-lock braking system in the same direction.

9. Method according to one of claims 1 to 8,
**characterized in that** in step (b) during generation of the control commands an electrical signal characteristic of a braking request is taken into account.

10. Anti-lock braking system which, as a function of the motional state of at least one wheel, generates control commands for at least one actuator (12), wherein means (26) are provided for determining a quantity, which is characteristic of the vertical tyre force and which is taken into account by the anti-lock braking system when generating the control commands, **characterized in that** also means (10) are provided for generating uncompensated control commands while taking into account the motional state of at least one wheel, means (30) for generating a compensation signal on the basis of the quantity characteristic of the vertical tyre force, and means (18) for generating the control commands for the at least one actuator (12) on the basis of the uncompensated control commands while taking the compensation signal into account.

## Revendications

1. Procédé pour l'utilisation d'un système antiblocage, dans lequel des instructions de réglage pour au moins un actionneur (12) sont générées en fonction de l'état de mouvement d'au moins une roue,
comprenant les étapes suivantes :
a) détermination d'une grandeur caractéristique pour la force de pneu verticale ; et
b) prise en compte de la grandeur déterminée à l'étape (a) lors de la génération des instructions de réglage ;
**caractérisé en ce que** l'étape (b) comprend les sous-étapes suivantes :
(b1) génération d'instructions de réglage non compensées compte tenu de l'état de mouvement d'au moins une roue ;
(b2) génération d'un signal de compensation sur la base de la grandeur caractéristique pour la force de pneu verticale ; et
(b3) génération des instructions de réglage pour le au moins un actionneur (12) sur la base des instructions de réglage non compensées compte tenu du signal de compensation.

2. Procédé selon la revendication 1,
**caractérisé en ce que** l'étape (a) comprend la prise en compte d'au moins un paramètre en rapport avec un système de suspension et/ou un système d'amortissement (24).

3. Procédé selon la revendication 2,
**caractérisé en ce que** l'étape (a) comprend la prise en compte d'une course de ressort.

4. Procédé selon la revendication 2 ou 3,
**caractérisé en ce que** l'étape (a) comprend la prise en compte de constantes de ressort et/ou de constantes d'amortisseur.

5. Procédé selon l'une quelconque des revendications 2 à 4,
**caractérisé en ce que** l'étape (a) comprend la prise en compte d'une force de ressort ou d'une pression de ressort.

6. Procédé selon l'une quelconque des revendications 1 à 5,
**caractérisé en ce que** la génération des instructions de réglage comprend à l'étape (b) une prise en compte des caractéristiques de pneumatique.

7. Procédé selon l'une quelconque des revendications 1 à 6,
**caractérisé en ce que** la force de pneu verticale est déterminée par évaluation à l'étape (a).

8. Procédé selon l'une quelconque des revendications 1 à 7,
**caractérisé en ce que** les instructions de réglage générées à l'étape (b) sont axées dans le cas d'une modification de la force de pneu verticale sur une modification allant dans le même sens d'une grandeur de réglage du système antiblocage.

9. Procédé selon l'une quelconque des revendications 1 à 8,
**caractérisé en ce qu'**un signal électrique caractéristique pour un souhait de freinage est pris en compte à l'étape (b) lors de la génération des instructions de réglage.

10. Système antiblocage qui génère en fonction de l'état de mouvement d'au moins une roue des instructions de réglage pour au moins un actionneur (12), des moyens (26) destinés à déterminer une grandeur caractéristique de la force de pneu verticale qui est prise en compte par le système antiblocage lors de la génération des instructions de réglage, étant présents, **caractérisé en ce que** des moyens (10) destinés à générer des instructions de réglage non compensées compte tenu de l'état de mouvement d'au moins une roue, des moyens (30) destinés à générer un signal de compensation sur la base de la grandeur caractéristique de la force de pneu verticale et des moyens (18) destinés à générer des instructions de réglage pour le au moins un actionneur (12) sur la base des instructions de réglage non compensées compte tenu du signal de compensation, sont présents.
